# EUROPEAN PATENT APPLICATION

(11) **EP 2 289 457 A1**
(43) Date of publication of application: **02.03.2011**
(21) Application number: 09010966.1
(22) Date of filing: 31.08.2009
(51) Int. Cl.: A61C 5/06, A61C 17/20

(54) **Dental cartridge**

(71) Applicant: DENTSPLY DETREY GmbH, 78467 Konstanz (DE)
(72) Inventor: Evers, Markus, 78476 Allensbach (DE); Schuh, Walter, 5111 Bürmoos (AT)
(74) Representative: Hartz, Nikolai

(57) **Abstract**

A dental cartridge (10) for a dental ejector type holder applying ultrasound vibration to a dental material contained in the dental cartridge (10), said cartridge (10) comprising
(a) a hollow elongated cylindrical body (12) of predetermined length and uniform interior diameter, which is molded from rigid plastic material, one end (121) of said body (12) being open and formed at the extremity thereof with an annular exterior flange (123), said cylindrical body (12) being adapted to be detachably mounted within a complementary seat in the ejector type holder, the opposite end (125) of said body (12) being closed by a wall;
(b) a discharge nozzle (127) of the same material as the body (12) and molded integrally therewith and having a passage therethrough extending from said closed end (125) of said body (12) to facilitate directing discharge of the dental material from the cartridge (10) to the interior of an oral cavity;
(c) a piston having sidewalls closely complementary to the inner walls of said body (12) and inserted into the open end thereof to form a combination closure and ejecting means for dental material when contained in said cartridge (10); **characterized in that** the annular exterior flange (123) comprises a portion (14) having an outer contour of a circular cone frustum or spherical segment, which has a planar portion (16) extending from a secant in the circular contour of the exterior flange (123) at the open end of the hollow elongated body (12) toward the opposite end (125) of said body (12) being closed by a wall.

## Description

### Field of the Invention

The present invention relates to a dental cartridge. More specifically, the present invention relates to a dental cartridge for a dental ejector type holder applying ultrasound vibration during extrusion of a dental material from the dental cartridge. The dental cartridge is particularly useful for storing and applying dental restorative materials having a high filler content.

The present invention also relates to a kit of parts comprising the dental cartridge of the invention and a dental ejector type holder for applying ultrasound vibration to the dental material in the cartridge.

Furthermore, the present invention relates to a process for extruding a dental material through a nozzle having a small diameter and useful length, which comprises applying ultrasound vibration to the dental cartridge of the invention by using a specific dental ejector type holder. The process of the invention is particularly useful for maintaining control over the dental material during extrusion despite the substantial and anisotropic forces acting on the dental cartridge and the dental material due to ultrasonic forces and optionally manual pressure required for extrusion.

### Background of the Invention

Dental cartridges which are insertable in a suitable type of holder and ejector device are known for packaging various types of dental material. Generic dental cartridges are often sealed cartridges for preserving purity of the dental material, for providing accurately measured quantities of dental material, as well as for minimizing the effort required for introducing bulk amounts of material into a syringe and ejecting measured quantities thereof. US 3,581,399 and US 3,900,954 to Dragan disclose typical examples of dental cartridges in conjunction with a holder and discharge device.

For filling a dental restorative material into a cavity of a tooth, usually a hand-held device in the form of a gun or syringe with small cartridges placed therein are used by pressing a lever, whereby the filling compound is extruded through a discharge nozzle. The discharge nozzle is introduced into the cavity in order to fill the cavity.

However, the use of a generic miniature capsule-like cartridge is limited by the viscosity of the dental material since small dimensions of the discharge nozzle require high extrusion forces in order to eject the dental material from the miniature capsule-like cartridge.

Therefore, conventional holder and discharge devices may only be used for extruding restorative materials of a less than optimum viscosity. Such dental restorative materials contain only a less than optimum proportion of filler so that the viscosity is acceptable for the mode of application.

A less than optimum proportion of filler results, however, in increased shrinkage of the restorative material upon hardening, which may give rise to gaps between the filling and the tooth as well as cracks in the filling causing subsequent risks and damage to the tooth.

Low-viscosity dental restorative materials are furthermore problematic in that until hardened there is a risk that portions of the restorative material may flow out of the cavity, deposit in undesirable areas, or penetrate into pockets of the gingival interface.

On the other hand, although a high filler load is desirable in view of the resulting reduced degree of shrinkage during hardening, the preparation of a direct restoration by using a holder and discharge device is problematic, especially in cases wherein highly viscous, pasty filling compounds are applied into a cavity of a tooth in such a way that the latter will be filled completely. Since the dentist cannot know with certainty if the dental material has been introduced all the way down to the bottom of the cavity and if the cavity is filled completely, the application of highly filled dental restorative materials represents a considerable risk.

A specific miniature capsule-like cartridge is disclosed in EP 0 948 942 which is used for storing a small quantity of dental material to be extruded by using a dental ejector type holder. Typically, dental restorative materials such as dental composite materials are stored and extruded by using the miniature capsule-like cartridge known from EP 0 948 942.

EP 1 210 025 discloses a hand-held device for filling a cavity of a tooth, which comprises a supply container, a synthetic resin filling compound contained in said supply container and having a viscosity which is lowered under the action of vibrations, means for conveying the filling compound from said supply container to a nozzle, from which the filling compound is injected into said cavity, a handle portion, and a sound generator connected to the nozzle. The sound generator sets the nozzle into oscillation while the filling compound is conveyed from the supply container to the nozzle, and the oscillation of the nozzle is transmitted to the filling compound as the filling compound flows through the nozzle.

The application of ultrasound vibration of a dental cartridge and holder assembly destabilizes the connection between the dental cartridge and the holder. Therefore, the orientation of a nozzle of the cartridge may change during ultrasound assisted extrusion. Moreover, the application of ultrasound energy to a capsule-like cartridge is problematic when the capsule-like cartridge cannot be locked into place. Finally, the safety of the application of ultrasound to a dental cartridge relies on the quality of the dental cartridge. Therefore, an additional risk exists when dental cartridges are used which are not designed to withstand the mechanical stress occurring by the application of ultrasound.

### Summary of the Invention

It is the problem of the present invention to provide a dental cartridge for a dental ejector type holder applying ultrasound vibration to a dental material contained in the dental cartridge, which may be seated in an ejector holder in a defined orientation and which may be securely locked into place with improved retention thereon and whereby a high viscosity dental material with a high proportion of inorganic filler may be applied into a cavity easily and efficiently for providing less shrinkage and improved abrasion-resistance.

Moreover, it is the problem of the present invention to simplify the preparation of direct dental restorations using dental composites on the basis of synthetic resin, and to reduce or even fully overcome the disadvantages described before such as, especially, filling deficiencies, formation of cracks and the risk of filling compound escaping from the cavity as well as maintaining control over the entire extrusion process.

This problem is solved according to the invention by a dental cartridge for a dental ejector type holder applying ultrasound vibration to a dental material contained in the dental cartridge as defined by claim 1.

The cartridge of the invention comprises
(a) a hollow elongated cylindrical body of predetermined length and uniform interior diameter, which is molded from rigid plastic material, one end of said body being open and formed at the extremity thereof with an annular exterior flange, said cylindrical body being adapted to be detachably mounted within a complementary seat in the ejector type holder, the opposite end of said body being closed by a wall;
(b) a discharge nipple of the same material as the body and molded integrally therewith and having a passage therethrough extending from said closed end of said body to facilitate directing discharge of the dental material from the cartridge to the interior of an oral cavity;
(c) a piston having sidewalls closely complementary to the inner walls of said body and inserted into the open end thereof to form a combination closure and ejecting means for dental material when contained in said cartridge;
   **characterized in that** the annular exterior flange comprises a portion having an outer contour of a circular cone frustum or spherical segment, which has a planar portion extending from a secant in the circular contour of the exterior flange at the open end of the hollow elongated body toward the opposite end of said body being closed by a wall.

The present invention also provides a kit of parts comprising a dental cartridge of the invention and an dental ejector type holder for applying ultrasound vibration to the dental material in the cartridge, whereby the cylindrical body of the cartridge is being adapted to be detachably mounted within a complementary seat in the ejector type holder, and whereby the ejector holder engages the planar portion of the annular exterior flange of the cartridge when the cartridge is seated in the ejector holder.

Finally, the present invention provides a process for extruding a dental material, which comprises applying ultrasound vibration to a dental cartridge according to the present invention by using a dental ejector type holder engaging the planar portion of the annular exterior flange of the cartridge.

Details of the foregoing objects and of the invention, as well as other objects thereof, are set forth in the following specification and illustrated in the accompanying drawings comprising a part thereof.

### Brief description of the Figures

FIGURE 1 is a side elevation of a cartridge in accordance with the present invention.
FIGURE 2 is a top plan view of the cartridge shown in FIGURE 1.
FIGURE 3 is a cross sectional view of a cartridge similar to that shown in FIGS. 1 and 2 along the plane A-A as shown in FIG. 2.
FIGURE 4 (a) and (b) are cross sectional views of different embodiments of a piston used in the dental cartridge according to the present invention.
FIGURE 5 shows a partial side view of a dental cartridge according to the present invention which is provided with a cap.

### Detailed Description of Preferred Embodiments

The invention provides a dental cartridge having a hollow elongated generally cylindrical body having an inner wall with a substantially uniform diameter. The inner wall encloses a chamber. The chamber has preferably an inner diameter in the range of from 3 to 10 mm and an overall length of from 10 to 30 mm. One end of the body is open and formed at the extremity thereof with a generally annular exterior flange. The outer diameter of the annual flange may be in the range of from 5 to 15 mm. The annular exterior flange comprises a portion having an outer contour of a circular cone frustum or spherical segment. The portion having an outer contour of a circular cone frustum or spherical segment is preferably increasing in diameter towards the end of the body which is open when viewed in a direction perpendicular to the longitudinal axis of the elongated generally cylindrical body. The annular exterior flange has a planar portion extending from a secant in the circular contour of the exterior flange at the open end of the hollow elongated body toward the opposite end of said body being closed by a wall when viewed along the longitudinal axis of the elongated generally cylindrical body. Preferably, the annular exterior flange comprises a portion which is a right circular cone frustum. The annular exterior flange may have indentations, recesses, grooves, or other surface structures which do not protrude from the overall contour of the annular exterior flange, thereby preventing the dental cartridge from being securely seated in a holder.

The planar portion may be engaged by a corresponding member of a dental ejector type holder in order to prevent rotation of the cylindrical body around the longitudinal axis of the dental cartridge and in order to prevent the dental cartridge from escaping from the holder in during application of ultrasound. Since a spacial relationship between the planar portion and the orientation of the nozzle is defined by the dental cartridge of the invention, the orientation of the nozzle will be maintained during the entire extrusion process. The specific orientation of the planar portion with regard to the orientation of the nozzle is not limited. Accordingly, the secant of the planar portion may be provided at any position of the circular contour of the exterior flange. In a preferred embodiment, the discharge nozzle has a longitudinal axis and the secant from which the planar portion extends is oriented perpendicular to the longitudinal axis of the discharge nozzle. In a further embodiment, the discharge nozzle has a longitudinal axis and the secant from which the planar portion extends is oriented parallel to the longitudinal axis of the discharge nozzle.

The plane of the circular contour is preferably oriented perpendicular to the plane of the longitudinal axis of the discharge nozzle. The angle between the longitudinal axis of the discharge nozzle and the plane of the circular contour of the generally annular exterior flange may be in the range of from 0 to 90°, preferably in the range of from 20 to 60°. Moreover, the hollow elongated cylindrical body has a longitudinal axis and the planar portion is preferably oriented parallel to the longitudinal axis of the hollow elongated cylindrical body. Moreover, the secant is preferably oriented perpendicular to the longitudinal axis of the hollow elongated cylindrical body.

In a preferred embodiment of the invention, the planar portion serves as a recognition pattern for the dental ejector type holder indicating a appropriate mechanical stability for application of ultrasound vibration energy. Accordingly, the dental ejector type holder may be configured so that only in case the planar portion is detected, ultrasound vibration energy is generated. The planar portion may have indentations, recesses, grooves, or other surface structures which do not protrude over the plane of the planar portion. However, the planar portion may contain may contain alphanumeric indications which serve to identify the content of the dental cartridge or the origin thereof.

The opposite end of the body is closed by an end wall. A discharge nozzle is integrally connected to the body and has a passageway therethrough extending from the chamber at the closed end of the body to facilitate discharge of a polymerizable dental composition from the cartridge. The discharge nozzle may have a diameter in the range of from 0.8 to 1.6 mm, preferably 1.0 to 1.5 mm. The length of the discharge nozzle corresponding to the length of the passageway may be in the range of from 4 to 25 mm, preferably 5 to 15 mm.

A cup-shaped cap may be removably connected to the discharge nozzle on the body to close the opening of the passageway at the outer end of the discharge nozzle. Accordingly, the dental cartridge may further comprise as a sealing means a cup-shaped cap extending over said nozzle , said cap being removably connected to the discharge nozzle on said body to close said outer end of the nozzle to seal the contents of the cartridge against ingress of ambient atmosphere and/or any surrounding contaminating matter.

The dental cartridge further comprises a piston having sidewalls closely complementary to the inner walls of said body. The piston is inserted into the open end of the dental cartridge to form a combination closure and ejecting means for dental material when contained in said cartridge.

The dental cartridge of the invention is designed to contain a specific dental material during storage.

The material of the dental cartridge is preferably a polymeric material. Preferably, the material of the hollow elongated generally cylindrical body is a polyester ether ketone material.

In a preferred embodiment, the piston is made of a material containing polyoxymethylene.

For improved extrusion performance during application of the dental material, the ratio of the speed of sound (20 kHz at 20°C) of the dental material and the material of the piston is in the range of from 0.1 to 10, more preferably 0.5 to 5. If the ratio of the speed of sound is outside of this range, the vibrational energy required for extruding the dental material becomes excessive, which is undesirable.

In a preferred embodiment, the body and piston are formed from plastic material suitably colored to render the body and piston impervious to the transmission of ambient light, thereby rendering the cartridge adapted to contain light-curable material in a manner to prevent premature curing of such material while stored in the cartridge. Moreover, the cartridge may be color-coded to indicate desired properties of the dental material contained in the cartridge.

A kit of parts according to the present invention may comprise one or more dental cartridges of the invention. Furthermore, the kit of parts comprises a dental ejector type holder for applying ultrasound vibration to the dental material in the cartridge.

The holder comprises a barrel having a interior bore extending from the rearward end of the barrel toward the forward end thereof for purposes of receiving a plunger of the same diameter as that of the interior bore for the major portion of the length of the plunger, the forward end of the plunger having a smaller diameter extension. The rearward end of the barrel extends through and is fixed to a handle member with which the barrel is perpendicular.

Pivotally connected to the handle is an operating lever, the upper end of which is pivotally connected to the upper end of handle by a pivot pin. The upper end of operating lever is offset laterally to facilitate operation of the lever with respect to the outer end of plunger which terminates in a button engageable by the inner surface of operating lever.

The cylindrical body of the cartridge is adapted to be detachably mounted within a complementary seat in the ejector type holder. The ejector holder engages the planar portion of the annular exterior flange of the cartridge when the cartridge is seated in the ejector holder. The planar portion may be engaged by a corresponding member of a dental ejector type holder in order to prevent rotation of the cylindrical body around the longitudinal axis of the dental cartridge. Since a spacial relationship between the planar portion and the orientation of the nozzle is defined by the dental cartridge of the invention, the orientation of the nozzle will be maintained during the entire extrusion process.

The ejector holder is adapted to apply ultrasound to the cartridge only when engaging the planar portion of the annular exterior flange of the cartridge. In a preferred embodiment of the invention, the planar portion serves as a recognition pattern for the dental ejector type holder indicating a appropriate mechanical stability for application of ultrasound vibration energy. Accordingly, the dental ejector type holder may be configured so that only in case the planar portion is detected, ultrasound vibration energy is generated.

Preferably, the holder contains a piezoelectric ultrasound oscillator. The ultrasound oscillator is vibrationally connected to the cartridge so as to apply ultrasound vibration to the dental material during extrusion thereof. The ultrasound oscillator may be coupled with the lever for activating the ultrasound oscillator when the lever is actuated, and for deactivating the ultrasound oscillator when the lever is returned to its original position.

The process for extruding a dental material according to the invention comprises applying ultrasound vibration to a dental cartridge according to the invention by using a dental ejector type holder engaging the planar portion of the annular exterior flange of the cartridge. Preferably, the dental material is a dental composite having a filler content of at least 75 percent by weight. Preferably the process is used for extrusion through a nozzle having a diameter in the range of from 0.8 to 1.6 mm, whereby the nozzle may have a length of at least 5.0 mm.

The invention is now described with reference to the Figures.

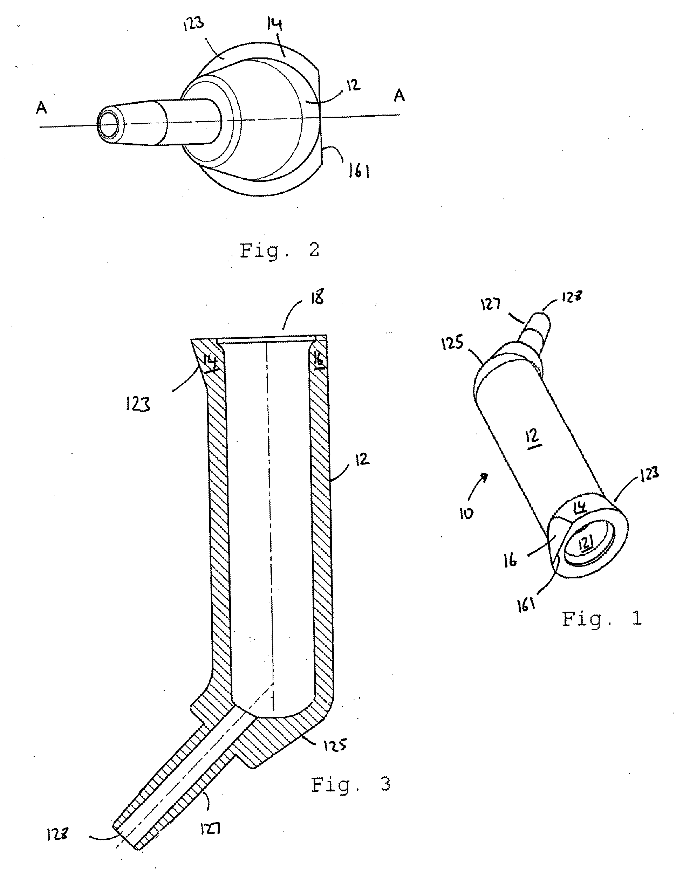

Figure 1 shows a side elevation of a cartridge 10 in accordance with the present invention. The cartridge is especially designed for an ejector holder (not shown) of a type to hold in operative position the cartridge embodying the principles of the present invention.

The cartridge 10 is preferably formed by molding from appropriate rigid synthetic resin or plastic material by means of a suitable mold. The intermediate body portion 12 of the cartridge 10 is of uniform interior and exterior diameter and extends from the specific annular flange 14 according to the invention adjacent the open end 18 of the cartridge to the opposite closed end. The body portion 12 is cylindrical, whereas the closed end is preferably hemi-spherical but is provided with an angularly extending discharge nozzle127, the opening 128 of which is preferably a very fine dimension of small diameter. The annular exterior flange 14 comprises a portion 123 having an outer contour of a circular cone frustum 14, which has a planar portion 16 extending from a secant 161 in the circular contour of the exterior flange at the open end of the hollow elongated body toward the opposite end 125 of said body 12 being closed by a wall.

Figure 2 is a top plan view of the cartridge shown in Figure 1. As shown, the dental cartridge comprises an annular exterior flange 123 at the proximal end of the cartridge. A portion 14 comprises a secant 161 in the circular contour of the exterior flange 123 at the open end of the hollow elongated body. The hollow elongated cylindrical body 12 has a longitudinal axis (not shown) whereby the secant is oriented perpendicular to the longitudinal axis of the hollow elongated cylindrical body 12.

Figure 3 shows a cross sectional view of a cartridge similar to that shown in FIGS. 1 and 2 along the plane A-A as shown in Fig. 2. According to Fig. 3, the dental cartridge 10 according to the invention comprises a hollow elongated cylindrical body 12 having a uniform interior diameter. One end 121 of said body 12 is open and formed at the extremity thereof with an annular exterior flange 123. The opposite end 125 of said body 12 is closed by a wall. A discharge nozzle 127 of the same material as the body 12 is molded integrally therewith and having a passage therethrough extending from said closed end 125 of the body 12 to facilitate directing discharge of the dental material from the cartridge 10 to the interior of an oral cavity. As shown by Figure 3, the annular exterior flange 123 comprises a portion 14 having an outer contour of a circular cone frustum which has a planar portion 16.

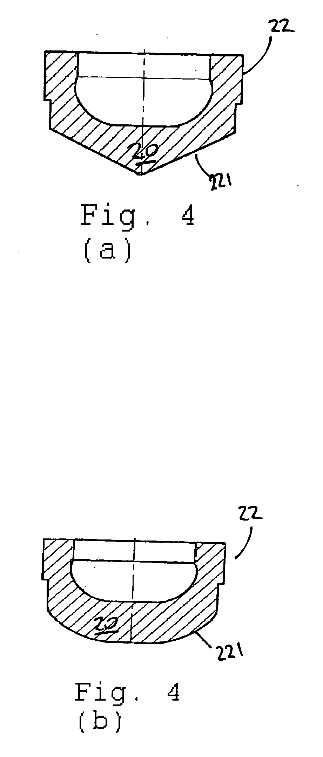

Figure 4a shows an embodiment of a piston 20 having sidewalls 22 closely complementary to the inner walls of the hollow elongated cylindrical body 12. The piston may be inserted into the open end of the hollow elongated cylindrical body 12 to form a combination closure and ejecting means for dental material when contained in said cartridge 10. The embodiment of the piston 20 shown in Fig. 4a has a conical surface 221 for contacting the dental material in the dental cartridge of the present invention.

Figure 4b shows an alternative embodiment of a piston 20 having a generally hemispherically shaped surface 221 for contacting the dental material in the dental cartridge of the present invention.

To effect ejection of material from the cartridge 10, such as dental composite material, dental cement, or other viscous dental material, the cartridge 10 includes a piston, which is very closely complementary in diameter to the interior of the cartridge, and the inner end thereof also is hemi-spherical and complementary to the interior of the closed end of the cartridge. Without restriction thereto, the outer end of the piston may be flat for engagement when the plunger is moved forwardly by actuation of the operating lever.

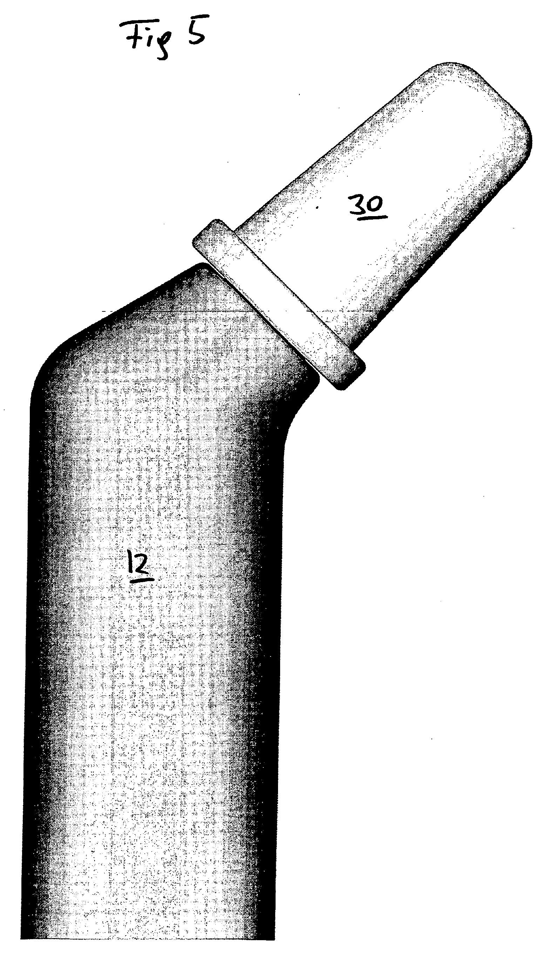

Figure 5 shows a partial side view of a dental cartridge according to the present invention which is provided with a cap 30.

Removal of the cartridge from the compartment is accomplished by disengaging the member of the ejector type holder, if necessary, and snapping the cartridge outwardly beyond the somewhat flexible upper edges and of the compartment.

From the foregoing, it will be clear that the ejector type holder may be especially adapted to receive the particular type of dental cartridge of the invention. The ejector may be of very simple, highly effective design, to permit sure and quick mounting of the cartridge within the compartment in the forward end of the barrel of the holder and, with equal facility, removal of the cartridge therefrom is readily achieved, while at the same time measures may be provided to avoid the application of ultrasound vibration energy to a dental cartridge which is not suitable to withstand the extrusion process.

The dental cartridge according to the invention can be filled at a factory with predetermined quantities of material, by automatic machinery, and sealed therein by application of the piston, which serves as a closure for the cartridge. During filling, air in the cartridge in advance of the material can be discharged through the discharge nozzle until filled and then the open end of the nozzle may suitably and inexpensively be closed by suitable seal means.

## Claims

1. A dental cartridge (10) for a dental ejector type holder applying ultrasound vibration to a dental material contained in the dental cartridge (10), said cartridge (10) comprising
(a) a hollow elongated cylindrical body (12) of predetermined length and uniform interior diameter, which is molded from rigid plastic material, one end (121) of said body (12) being open and formed at the extremity thereof with an annular exterior flange (123), said cylindrical body (12) being adapted to be detachably mounted within a complementary seat in the ejector type holder, the opposite end (125) of said body (12) being closed by a wall;
(b) a discharge nozzle (127) of the same material as the body (12) and molded integrally therewith and having a passage therethrough extending from said closed end (125) of said body (12) to facilitate directing discharge of the dental material from the cartridge (10) to the interior of an oral cavity;
(c) a piston having sidewalls closely complementary to the inner walls of said body (12) and inserted into the open end thereof to form a combination closure and ejecting means for dental material when contained in said cartridge (10); **characterized in that**
the annular exterior flange (123) comprises a portion (14) having an outer contour of a circular cone frustum or spherical segment, which has a planar portion (16) extending from a secant (161) in the circular contour of the exterior flange (123) at the open end of the hollow elongated body (12) toward the opposite end (125) of said body (12) being closed by a wall.

2. The cartridge (10) according to claim 1, wherein the hollow elongated cylindrical body (12) has a longitudinal axis and the planar portion is oriented parallel to the longitudinal axis of the hollow elongated cylindrical body (12).

3. The cartridge (10) according to claim 1 or 2, wherein the hollow elongated cylindrical body (12) has a longitudinal axis and the secant is oriented perpendicular to the longitudinal axis of the hollow elongated cylindrical body (12).

4. The cartridge (10) according to any one of claims 1 to 3, wherein the discharge nozzle (127) has a longitudinal axis and the secant is oriented perpendicular to the longitudinal axis of the discharge nozzle (127).

5. The cartridge (10) according to any one of the preceding claims, wherein the annular exterior flange (123) comprises a portion which is a right circular cone frustum.

6. The cartridge (10) according to any one of the preceding claims, which contains a dental material.

7. The cartridge according to claim 6 wherein the ratio of the speed of sound (20 kHz at 20°C) of the dental material and the material of the piston is in the range of from 0.1 to 10.

8. The cartridge (10) according to any one of the preceding claims, wherein the piston is made of a material selected from polyoxymethylene (POM).

9. The cartridge (10) according to any one of the preceding claims, wherein the hollow elongated cylindrical body (12) is made of a material selected from polyester ether ketone (PEEK).

10. A kit of parts comprising a dental cartridge (10) as defined in any one of the preceding claims and an dental ejector type holder for applying ultrasound vibration to the dental material in the cartridge (10), whereby the cylindrical body (12) of the cartridge (10) is being adapted to be detachably mounted within a complementary seat in the ejector type holder, and whereby the ejector holder engages the planar portion (16) of the annular exterior flange (123) of the cartridge (10) when the cartridge (10) is seated in the ejector holder.

11. The kit of parts according to claim 12, wherein the ejector holder is adapted to apply ultrasound to the cartridge (10) only when engaging the planar portion (16) of the annular exterior flange (123) of the cartridge (10).

12. A process for extruding a dental material, which comprises applying ultrasound vibration to a dental cartridge (10) defined by any one of claims 1 to 12 by using a dental ejector type holder engaging the planar portion (16) of the annular exterior flange (123) of the cartridge (10).

13. The process according to claim 14, wherein the dental material is a dental composite having a filler content of at least 75 percent by weight.

14. The process according to any one of claims 14 or 15, wherein the diameter of the nozzle is in the range of from 0.8 to 1.6 mm.

15. The process according to any one of claims 14 to 16 wherein the nozzle has a length of at least 5.0 mm.
